# EUROPEAN PATENT SPECIFICATION

(11) **EP 0 796 171 B1**
(45) Date of publication and mention of the grant of the patent: **27.03.2002**
(21) Application number: 95943663.5
(22) Date of filing: 05.12.1995
(51) Int. Cl.: B32B 31/20, B32B 31/26, B29C 51/16

(54) **METHOD OF MANUFACTURING A PACKAGING CONTAINER**
VERFAHREN ZUM HERSTELLEN EINES VERPACKUNGSBEHÄLTERS
PROCEDE DE FABRICATION D'UN RECIPIENT D'EMBALLAGE

(30) Priority: 05.12.1994 JP 30104794; 05.12.1994 JP 30104894
(43) Date of publication of application: 24.09.1997
(73) Proprietor: Tetra Laval Holdings & Finance SA, 1009 Pully (CH)
(72) Inventor: KANEKO, Masamichi, Tokyo 151 (JP); KONNO, Hidetoshi, Yokohama-shi, Kanagawa 232 (JP); SATOYOSHI, Junichi, Tokyo 143 (JP)
(74) Representative: Rösler, Uwe, Dipl.-Phys.
(86) International application number: US9515749
(87) International publication number: WO9617727

(56) References cited:
- DE-A- 3 607 211
- US-A- 3 159 698
- US-A- 3 266 390
- US-A- 3 366 019
- US-A- 4 226 170
- US-A- 5 043 130
- US-A- 5 094 706
- US-A- 5 193 265

## Description

### Field of the Invention

This invention relates to a method of manufacturing a packaging container.

### Background and Summary

Bottles, paper containers, metal cans, etc., have been hitherto used as packaging containers for containing food such as liquid food. A predetermined amount of the liquid food is filled in the packaging containers for putting on the market after sealing. Of these containers, bottles are ill-suited for sales with automatic vending machines because such containers cannot withstand shocks and are easily broken. While paper containers are suited for sales with automatic vending machines because such containers are not broken when subjected to shocks, the liquid food contained therein tends to spout from the pour opening when deformed during unsealing because such containers are flexible.

Metal cans which can withstand shocks and have high rigidity are suited for sales with automatic vending machines. It is, however, difficult to crush spent conventional metal cans. Further, it is troublesome to recover spent aluminum cans and steel cans separately. Further, since it is not possible to warm liquid food in metal cans by induction heating in sales of the hot liquid food with automatic vending machines, heating is generally performed by indirect contact with hot air. Thus, it takes a long time to heat the liquid food to a desired temperature. Moreover, because they have poor heat insulating properties, metal cans tend to be too hot to grip after being discharged from automatic vending machines, and the liquid food is cooled within a short time.

DE-A-3 607 211 discloses a packaging container with an outer container made of polypropylene and an inner sheet having multiple layers with materials such as polypropylene, polyvinyldenchloride, etc., wherein adhesive material is at least provided between some of these layers and all the other layers may be welded to one another by sufficiently heating the different layers.

The sheet may be deformed by evacuating a die using passages in the lower die part and openings in the outer container.

US-A-5,043,130 discloses a method of manufacturing labeled containers. An adhesive layer is always used on the inner surface of a tubular label for connecting the label to a resin sheet. Corresponding materials for the label, adhesive layer, or resin sheet that are disclosed in this documents are e.g. polypropylene, polyethylene, polyester, etc.

In view of the prior art it is an object of the invention to provide a method of manufacturing a packaging container which can solve the problems of the conventional packaging containers such as providing a packaging container: that is capable of being easily recovered after having been discarded; permits heating of the liquid food contained therein by induction heating, and provides good heat insulating properties.

A method of manufacturing a packaging container according to an aspect of the present invention is provided in which a jacket is placed within a mold cavity and a multilayer resin sheet is deformed within the jacket into a cup-like shape by a tip expansion method (Cuspation Dilation forming method) thereby molding a container and integrally fuse-bonding the container to the jacket utilizing the heat applied during molding. A food may then be charged in the container and the resulting container may be closed with a lid. That surface of the jacket which is contacted with the container is formed of a foamed resin material compatible with the resin constituting the outermost layer of the multilayer sheet deformed into the cup-like shape.

According to another aspect of the present invention, the resin constituting the outermost layer of the multilayer sheet deformed into the cup-like shape is polypropylene and the foamed material is foamed polypropylene. The multilayer sheet may have a layer of an ethylene-vinylalcohol copolymer.

In the above-described method of manufacturing a packaging container, a jacket is placed within a mold cavity and a multilayer resin sheet is deformed within the jacket into a cup-like shape by a tip expansion method, thereby molding a container and integrally fuse-bonding the container to the jacket utilizing the heat applied during the molding. Therefore, it is not necessary to interpose, e.g., a thermoactive adhesive, etc., between the container and the jacket. In this case, since the resin which constitutes that surface of the jacket which is contacted with the container is formed of a foamed resin material compatible with the resin constituting the outermost layer of the multilayer sheet, the container can be fuse-bonded with the jacket.

The present invention offers various advantages. For example, crushing the spent containers and recovering the spent containers is facilitated. Further, in sales of a food with after heating with automatic vending machines, it is possible to warm the container by induction heating so that the time required to heat the food to a sufficiently high temperature can be made short. Moreover, because the heat insulating property is high because of the use of the foamed material, the container may be held in a user's hand immediately after the discharge from automatic vending machines. Additionally, the food within the container can be prevented from being cooled within a short time. Moreover, the heat applied to the multilayer sheet during the molding by the tip expansion method can be prevented from running away to the molds.

In the above-described tip expansion method, the multilayer sheet is molded after having been heated above the melting point thereof. Therefore, it is not necessary to sterilize the container before filling the container with food. Further, the container is not shrunk or deformed due to molecular orientation during the retort stage. Additionally, the use of the tip expansion method makes it easy to adjust the thickness of the container.

Thus, since the melting point of the ethylene-vinyl alcohol copolymer is higher than that of polypropylene, the multilayer sheet may be supported by the layer of the ethylene-vinyl alcohol copolymer. As a result, it is possible to heat the multilayer sheet at a high temperature. Further, since the container is molded under a condition where a large amount of heat is retained therein, the fuse-adhesion between the container and the jacket is improved.

According to the present invention, a sleeve having a foamed material and having top and bottom ends each folded inside is placed within a mold cavity and a multilayer resin sheet is deformed within the sleeve into a cup-like shape by a tip expansion method, thereby molding a container and integrally fuse-bonding the container to the top and bottom ends of the sleeve utilizing the heat applied during the molding. A food may then be charged in the container and the resulting container may be closed with a lid.

Those surfaces of the sleeve which are folded inside and which are contacted with the container are each formed of a resin compatible with the resin constituting the outermost layer of the multilayer sheet deformed into the cup-like shape.

According to another aspect of the present invention, the sleeve is prepared by providing a cylindrical body having an outer surface covered with a film made of the compatible resin, and each of the top and bottom ends of the cylindrical body are folded inside.

According to another aspect of the present invention, the resin constituting the outermost layer of the multilayer sheet deformed into said cup-like shape is polypropylene and the resin which forms the surfaces of the sleeve that are folded inside and are contacted with the container is polypropylene. The resin constituting the outermost layer of the multilayer sheet deformed into the cup-like shape is polypropylene. The multilayer sheet may have a layer of an ethylene-vinylalcohol copolymer.

In the above-described method of manufacturing a packaging container, a sleeve having a foamed material and having top and bottom ends each folded inside is placed within a mold cavity and a multilayer resin sheet is deformed within the sleeve into a cup-like shape by a tip expansion method, thereby molding a container and integrally fuse-bonding the container to the top and bottom ends of the sleeve utilizing the heat applied during the molding. Thus, according to the present invention, it is not necessary to interpose, e.g., a thermoactive adhesive, etc., between the container and the sleeve or to apply a thermoactive adhesive to the inside of the sleeve, facilitating storing and handling the sleeves.

In that portion of the sleeve located between the top and bottom ends, a material other than the compatible resin, such as a paper material, may be in contact with the outermost layer of the container and, hence, the sleeve and the container may not be fuse-bonded to each other and may remain separated from each other. When a hot liquid food is filled in the container, the pressure reduction caused by the cooling thereof is attenuated by a deformation of the container only, so that the sleeve is prevented from deforming. As a consequence, the strength of the sleeve required for transportation and use of the container can be designed to have a minimal value. It follows that the sleeve can be made thin and the costs therefor can be reduced.

According to another aspect of the present invention, the sleeve is prepared by providing a cylindrical body having an outer surface covered with a film made of the compatible resin, and folding each of the top and bottom ends of the cylindrical body inside. The outer surface of a packaging container is generally coated with a film for decorative and protective purposes. In the present invention the compatible resin film also serves to function as such decorative and protective film. Thus, the production step and costs therefor can be reduced.

According to another aspect of the present invention, the resin constituting the outermost layer of the multilayer sheet deformed into the cup-like shape and the resin which forms the surfaces of the sleeve that are folded inside and contacted with the container are each polypropylene. The multilayer sheet has a layer of an ethylene-vinylalcohol copolymer. Thus, since the melting point of the ethylene-vinyl alcohol copolymer is higher than that of polypropylene, the multilayer sheet may be supported by the layer of the ethylene-vinyl alcohol copolymer. As a result, it is possible to heat the multilayer sheet at a high temperature. Further, since the container is molded under a condition where a large amount of heat is retained therein, the fuse-adhesion between the container and the sleeve is improved.

### Brief Description of the Drawings

The features and advantages of the present invention are well understood by reading the following detailed description in conjunction with the drawings in which like numerals indicate similar elements and in which:
FIG. 1 is an illustration, partly in cross-section, of an embodiment of a packaging container according to an embodiment of the present invention;
FIG. 2 is an exploded, perspective view of a packaging container according to an embodiment of the present invention;
FIG. 3 is a perspective view of the embodiment of a packaging container according to an embodiment of the present invention;
FIG. 4 is a sectional view showing part of a flange portion of an embodiment of the present invention;
FIG. 5 is a sectional view showing part of a bottom wall of an embodiment of the present invention;
FIGS. 6-8 show steps for molding a packaging container according to an embodiment of the present invention;
FIG. 9 is a partly cross-sectional view of a second embodiment of a packaging container according to the present invention;
FIG. 10 is a sectional view showing part of a flange portion of the second embodiment of the present invention; and
FIG. 11 is a sectional view showing part of a bottom wall of the second embodiment of the present invention.

### Detailed Description

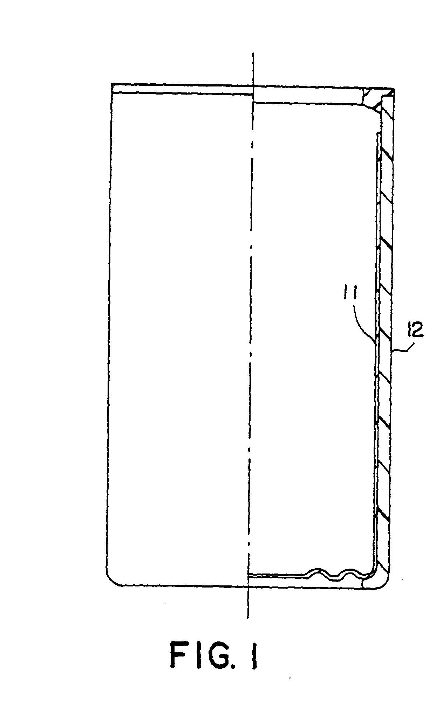

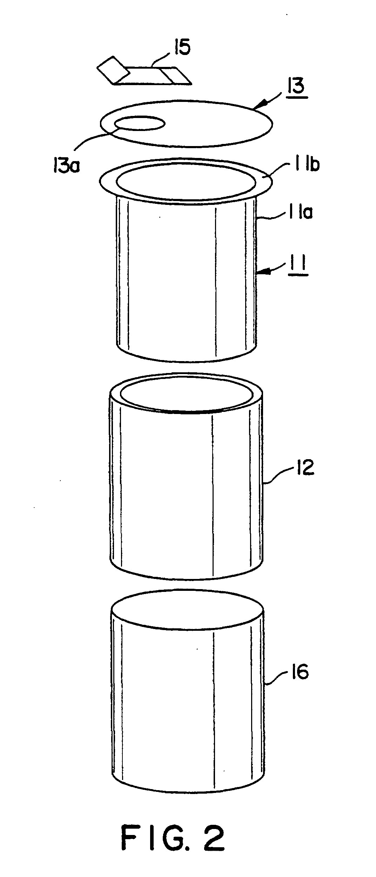

An embodiment, according to the present invention, of a container 11 for containing liquid food is shown in FIGS. 1-5. The container is preferably formed of a transparent, thermoplastic material having a high gas barrier property and has a cup-like shape which is open at its upper end. The container is preferably formed by deforming a multilayer resin sheet by a tip expanding method (melt phase compressed air molding method) into a cup-like shape. The multilayer sheet is formed by an appropriate method such as coextrusion molding, blown film molding method, etc. As seen in FIG. 2, the container is composed of a body portion 11a having a bottom and having a cylindrical cross-section and a radially outwardly extending flange portion 11b provided at an upper end of the body portion 11a. In the present embodiment, the outer diameter of the container is about 53 mm while the height is about 135 mm.

In the tip expansion method of forming the multilayer sheet, the multilayer sheet is molded after having been heated at about 180 °C which is higher than the melting point of the sheet. As a consequence, it is not necessary to sterilize the container 11 before filling the liquid food. Further, the container 11 is not shrunk or deformed due to molecular orientation during the retort stage. Additionally, it is easy to adjust the thickness of the container 11.

The structure of the multilayer sheet may include, in embodiments of the invention, a polypropylene (hereinafter referred to as PP) layer for at least one of the outer surfaces of the multilayer sheet and a layer of copolymer or polymer of an ethylene-vinyl alcohol (herein after referred to as EVOH): PP layer/adhesive layer/EVOH layer/adhesive layer/ regenerated PP layer. Alternatively, structures including the following may be adopted: PP layer/regenerated PP/adhesive layer/EVOH layer/ adhesive layer/regenerated PP layer/PP layer; PP layer/EVOH layer/PP layer; PP layer/adhesive layer/EVOH layer/ adhesive layer/APET layer (amorphous polyethylene teraphthalate).

The use of EVOH in the layer structure can improve the gas barrier property of the multilayer sheet. In the present embodiment, the thickness of the multilayer sheet is 2.5 mm and the proportion of the EVOH layer is 14%.

As seen in FIGS. 1-2 and 4-5, a sleeve 12 serving as the jacket and formed of a foamed material having a higher rigidity and a better heat insulating property than those of the container 11 is provided around the outer side of the container 11. In this embodiment, the total thickness of the body portion 11a of the container 11 and the sleeve 12 is about 150 µm and the thickness of the bottom wall of the container 11 is 350 µm.

The sleeve 12 has a cylindrical shape and serves to retain the shape of the container 11 and to function as a heat insulator for preventing the heat transfer between the liquid food contained in the container 11 and the outside atmosphere. The sleeve may be substituted by a cylindrical member having a bottom. When such a cylindrical member is used, an opening is formed in the bottom thereof for use in evacuating the container 11 during the molding, thereof by the tip expansion method.

According to a preferred embodiment of the invention, the sleeve 12 is preferably formed of foamed PP. The diameter of pores formed by foaming is about 150 µm. The foamed PP may be substituted by a layer structure composed of a PP layer and a foamed PP layer. In this case, the foamed PP layer is located on the side which is contacted with the container 11.

To shape the sleeve 12 in a cylindrical form, a blank sheet (not shown) composed of foamed PP previously cut to have a predetermined size is wound around a mandrel. Fusion bonding such as by ultrasonic sealing is then performed to form a vertical seal. In the present embodiment, a blank sheet of foamed PP having a thickness of 0.8 mm is used.

As seen in FIGS. 1 and 4-5, the container 11 and the sleeve 12 form a double wall structure. In this case, the sleeve is first prepared and the container 11 is then formed by the tip expansion method within the sleeve 12. The liquid food is then filled and the container 11 is sealed with the lid 13. Since the sleeve 12 serves to function as a structure material for reinforcing the strength of the container 11, the container 11 can be made thin so that it becomes easy to carry out the tip expansion method.

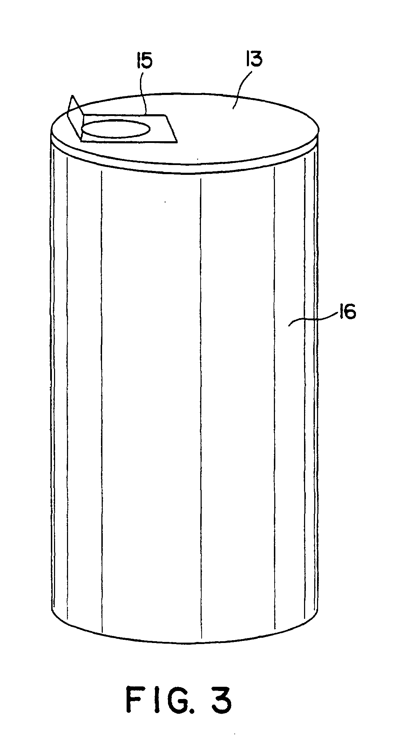

As seen in FIGS. 2 and 3, on the outer surface of the sleeve 12, a film 16 is preferably provided. The film has a back surface printed with desired letters and patterns. Where the sleeve 12 is formed of a foamed PP, the film 16 is preferably a PP film and is preferably covered over a surface of the sleeve 12 prior to forming the container 11 within the sleeve. Thus, the pearl-like gloss of foamed PP and the gloss of the PP film can improve the beauty of the prints.

A stretched PP film may be used as the film 16. In this case, after the container 11 has been formed within the sleeve 12, the film 16 may be covered on the surface of the sleeve 12 by a thermal shrinking method. When prints are formed on the surface of the sleeve 12, the provision of the film 16 is not required.

Since the entire of the packaging container is formed of resins, it is easy to crush discarded containers and it is easy to recover such containers. Further, it is possible to heat the packaging container by induction heating when the liquid food is sold after heating with automatic vending machines. Thus, the liquid food can be heated to a desired temperature within a short period of time. Moreover, since the use of the foamed PP can improve the heat insulating property, the packaging container immediately after discharge from the vending matching can be held in the hand. Additionally, the liquid food is prevented from being cooled within a short time. Furthermore, the heat applied to the multilayer sheet during molding by the tip expansion method can be prevented from running away to the molds.

Since the multilayer sheet is subjected to the tip expansion molding, it is heated at a temperature of about 180°C which is higher than the melting point thereof. Since a PP layer or a regenerated PP layer represents the outermost layer of the multilayer sheet deformed into a cup-like shape, that surface of the sleeve 12 which is contacted with the container 11 is formed of the foamed PP. As a result, the thin walls of the foamed cells of the foamed PP is melted by the heat applied thereto during the molding of the container 11 so that the container 11 and the sleeve 12 are fuse-bonded with each other.

When the molded container 11 is expanded, it is brought into contact with the foamed PP of the sleeve 12 with a significant amount of heat being retained therein. The thin walls of the foamed cells of the foamed PP are provided with a sufficient amount of heat so that adhesion between the container 11 and the sleeve 12 is improved. Since that surface of the sleeve 12 which is contacted with the container is formed of a foamed material of a resin compatible with the resin constituting the outermost layer of the multilayer sheet deformed into the cup-like shape, the container 11 can be easily integrally fuse-bonded with the sleeve 12 at the time of the molding of the container 11, so that it is not necessary to interpose a thermoactive adhesive, etc., between the container 11 and the sleeve 12.

When the container 11 is made from a multilayer sheet having a structure in which an EVOH layer is sandwiched between PP layers as in the present embodiment, the multilayer sheet may be supported by the EVOH layer whose melting point is higher than that of PP. As a result, it is possible to heat the multilayer sheet at a high temperature. Further, since the container 11 is molded under a condition where a large amount of heat is retained therein, the fuse-adhesion between the container 11 and the sleeve 12 is improved.

In the tip expansion method for molding the container 11, the multilayer sheet is secured between female and male molds. Therefore, it is easy to shape the vicinity of the flange portion 11b with a large thickness. In this case, the vicinity of the flange portion 11b is brought into contact with the foamed PP of the sleeve 12 with a significant amount of heat being retained therein. Thus, the thin walls of the foamed cells of the foamed PP are provided with a sufficient amount of heat so that the adhesion between the container 11 and the sleeve 12 is improved.

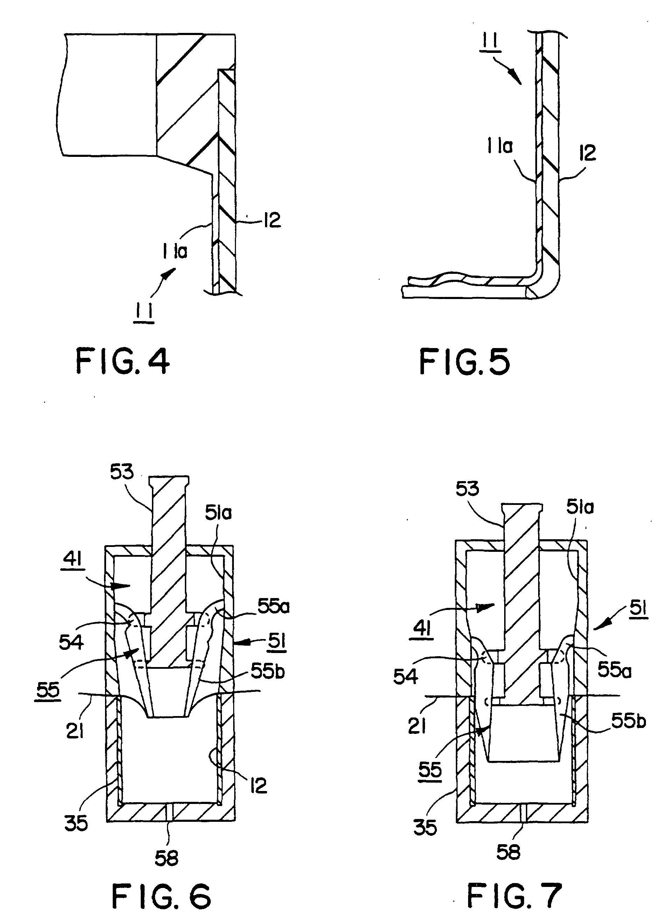

As shown in FIG. 5, the bottom wall of the container 11 which is not reinforced by the sleeve 12 is preferably made thicker than the body portion 11a. Further, the lower end of the sleeve 12 is preferably radially inwardly curved. As a result, the comer portion defined by the bottom wall of the container 11 and the body portion 11a is prevented from becoming thin. In this case, the vicinity of the corner portion is brought into contact with the foamed PP of the sleeve 12 with a significant amount of heat being retained therein. Accordingly, the thin walls of the foamed cells of the foamed PP are provided with a sufficient amount of heat so that the adhesion between the container 11 and the sleeve 12 is improved. Since the adhesion between the container 11 and the sleeve 12 is made high by making those portions of the container 11 corresponding to the upper and lower ends of the sleeve thick, not only the rigidity and buckling strength of the packaging container is high but also the durability of thereof is improved.

According to another embodiment of the invention, the multilayer sheet constituting the container 11 may have the following layer structure: Polystyrene (hereinafter referred to as PS) layer/polyethylene (hereinafter referred to as PE) layer/PS layer/EVOH layer/PE layer. The polyethylene layer represents the outermost layer of the multilayer sheet deformed into the cup-like shape, while that surface of the sleeve which is contacted with the container 11 is formed of foamed polyethylene.

According to a further embodiment of the present invention, an APET layer may represent the outermost layer of the multilayer sheet deformed into the cup-like shape. That surface of the sleeve which is contacted with the container 11 is formed of foamed APET.

After the container 11 has been filled with the liquid food, the lid 13, seen in FIGS. 2 and 3, is fixed on the upper surface of the flange portion 11b to close the container 11. The lid is preferably made of a transparent resin film having high gas barrier property and is preferably fuse-bonded to the flange portion 11b by a suitable fuse-bonding method such as heat sealing or ultrasonic sealing. In this case, since the resin film is transparent, the liquid food contained in the container 11 can be seen through the lid 13.

The resin film is preferably molded by a suitable method such as a coextrusion method, a blown film molding method, or the like, to a thickness of 30-50 µm. The layer structure of the resin film may be, for example, as follows: PP layer/adhesive layer/EVOH layer/adhesive layer/PP layer. Further, the lid 13 may be formed of a transparent resin plate having high gas barrier property. In this case, the resin plate may be molded by a hot press method or an injection molding method.

A pour opening 13a for pouring the liquid food contained in the container 11 therethrough is formed in a predetermined portion of the lid 13 and is sealed with a pull-tab 15. The pull-tab 15 may be formed of a material having good gas barrier property and high rigidity and tensile strength and may be colored. The layer structure of the pull-tab 15 may be, for example, as follows: Biaxially oriented PP layer/peelable adhesive layer.

Since the packaging container does not use a metal, it is easy to crush the discarded packaging containers and it is also easy to recover same.

Since the container is made of resins and since the sleeve 12 is made of a non-metallic material, the liquid food can be heated by induction heating for sales with automatic vending machines. Therefore, the liquid food can be heated to a desired temperature within a short period of time.

Further, because the sleeve 12 has high heat insulating property, it is easy to take the container by hands immediately after the discharge from automatic vending machines. Additionally, the liquid food within the container can be prevented from being cooled within a short time.

Steps in the tip expansion method for molding a packaging container according to the present invention are shown in FIGS. 6-8. In these Figures, the reference numeral 21 designates a multilayer film, 35 a female mold and 41 a tip expanding plug. The tip expanding plug 41 is disposed opposite the female mold 35 and includes an expanding cam 51 having all opening facing toward the female mold 35. The tip expanding plug 41 is in the form of a cylinder having a closed end. A rod 53 is disposed in the center of the plug 41 and is movable up and down therein. Cam blades 55 are arranged for rocking movement about a fulcrum 54 at tips of the rod 53. A plurality of the cam blades 55 are disposed along the circumference of the rod 53. Each blade 55 is composed of a cam-driven section 55a below the fulcrum 54 and an expansion operation section 55b above the fulcrum 54. The sleeve is previously set within the female mold 35.

The expanding cam 51 has an inside surface provided with a cam face 51a whose inside diameter is reduced in the upward direction. Thus, as shown in FIG. 7, when the rod 53 is moved downward, the cam-driven section 55a of each blade 55 is displaced along the expanding cam 51 and is rotated because the contact point therebetween is gradually radially inwardly moved. Upon the rocking movement of the cam blades 55, the tip of each expansion-operation section 55b is radially outwardly displaced. During the above procedure, the inside space of the female mold 35 is evacuated through a hole 58 formed in the female mold 35.

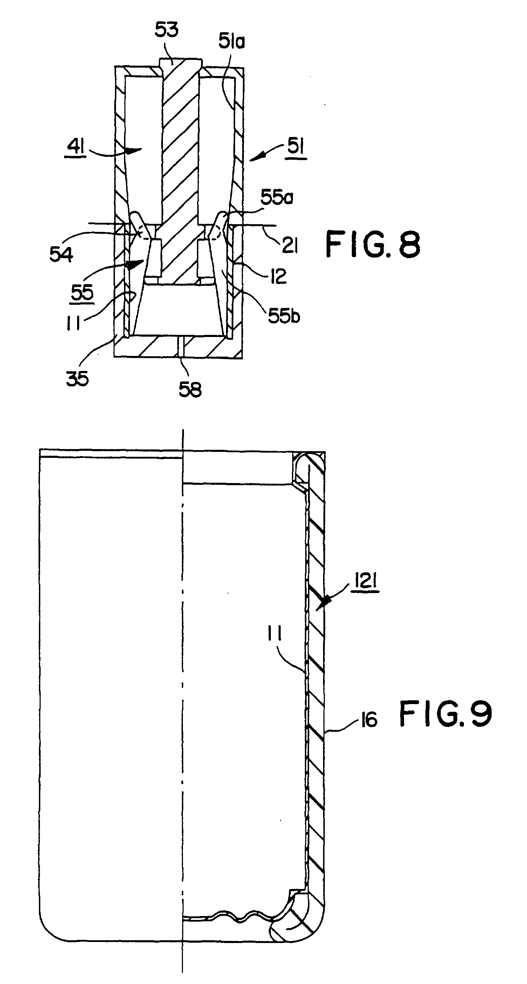

Thus, as shown in FIG. 8, a container 11 having a good wall thickness balance and a thin and uniform body wall thickness and bottom wall thickness can be molded with the simultaneous melt-adhesion of the container 11 to the sleeve 12. Further, the container 11 can be light in weight and can be made air-tight.

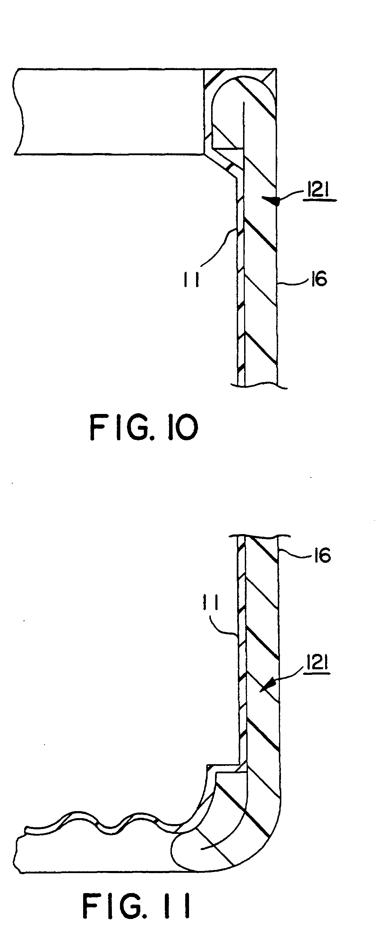

According to a second embodiment of the invention as seen in FIGS. 9-11, the top and bottom ends of the sleeve 121 are folded inside to enhance the strength thereof. As seen in FIG. 11, the bottom end of the sleeve 121 is preferably further curved toward the center of the packaging container. The container 11 and the sleeve 121 form a double wall structure. In this case, the sleeve is first prepared and the container 11 is then formed by the tip expansion method within the sleeve 121. The liquid food is then filled and the container 11 is sealed with the lid 13. Since the sleeve 121 serves to function as a structure material for reinforcing the strength of the container 11, the container 11 can be made thin so that it becomes easy to carry out the tip expansion method. The packaging container may, according to an embodiment of the invention, be made according to the method for making the packaging container discussed above with regard to FIGS. 1-5.

On the outer surface of the sleeve 121, a film 16 is preferably provided. The film has a back surface printed with desired letters and patterns. Thus, the packaging container has beautiful appearance and the water resistance of the sleeve can be improved.

According to a preferred embodiment of the invention, paper previously coated with the film 16 is cut to a predetermined width and the cut paper is wound in a spiral pattern around a mandrel (not shown) in a plural plies. Each ply is bonded with an adhesive to an adjacent ply to form the sleeve 121 of a cylindrical body. After the container 11 has been formed within the sleeve 121, the film 16 may be covered with a stretched PP film, if desired.

Since the packaging container is formed of paper and resins, it is easy to crush discarded containers and it is easy to recover such containers.

Since the multilayer sheet is subjected to the tip expansion molding, it is heated at a temperature of about 180°C which is higher than the melting point thereof. Since a PP layer or a regenerated PP layer preferably represents the outermost layer of the multilayer sheet deformed into a cup-like shape and since the top and bottom ends of the sleeve 121 are folded inside, the film 16 formed of a PP film is contacted with the outermost layer of the multilayer sheet. Thus, by the heat applied during the molding of the container 11, the container 11 and the sleeve 121 are fuse-bonded to each other. When the molded container 11 is expanded, it is brought into contact with the film 16 at the top and bottom ends of the sleeve 121 with a significant amount of heat being retained therein. Thus, the film 16 is supplied with a sufficient amount of heat so that the surface thereof is thermally activated, and adhesion between the container 11 and the sleeve 121 is improved.

Since those surfaces of the sleeve 121 which are folded inside at the top and bottom ends thereof and which are contacted with the container are formed of a resin compatible with the resin constituting the outermost layer of the multilayer sheet deformed into the cup-like shape, the container 11 can be integrally fuse-bonded with the top and bottom ends of the sleeve 121 at the time of the molding of the container 11, so that it is not necessary to interpose a thermoactive adhesive, etc., between the container 11 and the sleeve 121 or to apply a thermoactive adhesive to the inside of the sleeve 121. Further, storage and handling of the sleeves 121 is facilitated.

When the container 11 is made from a multilayer sheet having a structure in which an EVOH layer is sandwiched between PP layers as in the present embodiment, the multilayer sheet may be supported by the EVOH layer whose melting point is higher than that of PP. As a result, it is possible to heat the multilayer sheet at a high temperature. Further, since the container 11 is molded under a condition where a large amount of heat is retained therein, the fuse-adhesion between the container 11 and the sleeve 121 is improved.

In that portion of the sleeve 121 located between the top and bottom ends, the paper material is contacted with the outermost layer of the container and, hence, the sleeve 121 and the container 11 are not fuse-bonded to each other but remain separated from each other. Therefore, when a hot liquid food is filled in the packaging container, the pressure reduction caused by the cooling thereof is attenuated by a deformation of the container 11 only, so that the sleeve 121 is prevented from deforming. As a consequence, the strength of the sleeve 121 required for transportation and use of the packaging container can be designed to have a minimal value. It follows that the sleeve can be made thin and the costs therefor can be reduced.

## Claims

1. A method of manufacturing a packaging container (11, 12, 13, 15), comprising the steps of:
placing a sleeve (12, 121) having an inner surface within a mold cavity (35), said sleeve including a foamed material;
deforming a sheet (21) having multiple layers into a cup-shaped container (11), the container having an outermost layer, by a tip expansion method to mold the container within the sleeve (12, 121) and to bond one or more portions of the outermost layer of the container to one or more portions of the inner surface of the sleeve,
wherein the portions of the inner surface of the sleeve (12, 121) which are bonded to the portions of the outermost layer of the container (11) are formed of a material compatible with the portions of the outermost layer of the container.

2. The method according to claim 1, **characterized in that** the sheet (21) includes a layer of an ethylene-vinylalcohol copolymer.

3. The method according to claims 1 or 2, **characterized in that** the outermost layer of the container (11) includes polypropylene and the sleeve (12, 121) includes foamed polypropylene as said foamed material.

4. The method according to claim 2, **characterized in that** during the deforming step, the sheet (21) is heated to a temperature higher than a melting point of the outermost layer of the container (11) and lower than the melting point of the layer of ethylene-vinylalcohol copolymer.

5. The method according to claim 3, **characterized in that** during the deforming step, the sheet (21) is heated to a temperature higher than a melting point of polypropylene and lower than the melting point of the layer of ethylene-vinylalcohol copolymer.

6. The method according to claims 1 or 2, **characterized in that** the outermost layer of the container (11) includes polyethylene and the sleeve (12, 121) includes foamed polyethylene as said foamed material.

7. The method according to one of the previous claims, **characterized by** comprising the further step of foldling top and bottom ends of the sleeve (121) inwardly so that the inner surface of the sleeve includes inwardly folded top and bottom portions, wherein the portions of the outermost layer of the container (11) are bonded to the inwardly folded top and bottom portions of the inner surface of the sleeve (121).

## Patentansprüche

1. Verfahren zur Herstellung eines Verpackungsbehälters (11, 12, 13, 15), welches die folgenden Schritte umfasst:
Einsetzen einer Hülse (12, 121) mit einer Innenfläche in einen Formhohlraum (35), wobei die Hülse ein geschäumtes Material enthält;
Verformen einer Folie (21) mit mehrfachen Lagen mittels eines Verfahrens mit Aufweitung der Spitze in einen becherförmigen Behälter (11), wobei der Behälter eine äußerste Lage aufweist, zur Formung des Behälters innerhalb der Hülse (12, 121) und zur Verbindung eines oder mehrerer Abschnitte der äußersten Schicht des Behälters mit einem oder mehreren Abschnitten der Innenfläche der Hülse,
bei welchem die Bereiche der Innenfläche der Hülse (12, 121), die mit den Bereichen der äußersten Schicht des Behälters (11) verbunden werden, aus einem Werkstoff gebildet sind, der mit den Abschnitten der äußersten Schicht des Behälters verträglich ist.

2. Verfahren nach Anspruch 1, **dadurch gekennzeichnet, dass** die Folie (21) eine Schicht aus einem Ethylen-Ninylalkohol-Kopolymer aufweist.

3. Verfahren nach den Ansprüchen 1 oder 2, **dadurch gekennzeichnet, dass** die äußerste Schicht des Behälters (11) Polypropylen enthält und die Hülse (12, 121) aufgeschäumtes Polypropylen als geschäumtes Material enthält.

4. Verfahren nach Anspruch 2, **dadurch gekennzeichnet, dass** während des Schritts zur Verformung die Folie (21) auf eine Temperatur erwärmt wird, die über dem Schmelzpunkt der äußersten Schicht des Behälters (11) und unter dem Schmelzpunkt der Schicht aus Ethylen-/Vinylalkohol-Kopolymer liegt.

5. Verfahren nach Anspruch 3, **dadurch gekennzeichnet, dass** während des Schritts zur Verformung die Folie (21) auf eine Temperatur erwärmt wird, die über dem Schmelzpunkt von Polypropylen und unter dem Schmelzpunkt der Schicht aus Ethylen-Ninylalkohol-Kopolymer liegt.

6. Verfahren nach den Ansprüchen 1 oder 2, **dadurch gekennzeichnet, dass** die äußerte Schicht des Behälters (11) Polyethylen enthält und die Hülse (12, 121) aufgeschäumtes Polyethylen aus geschäumtes Material enthält.

7. Verfahren nach einem der vorhergehenden Ansprüche, **dadurch gekennzeichnet, dass** es den weiteren Schritt umfasst, bei dem das obere und untere Ende der Hülse (121) so nach innen umgeschlagen werden, dass die Innenfläche der Hülse nach innen umgeschlagene obere und untere Abschnitte aufweist, wobei die Abschnitte der äußersten Schicht des Behälters (11) mit den nach innen umgeschlagenen oberen und unteren Abschnitten der Innenfläche der Hülse (121) fest verbunden werden.

## Revendications

1. Procédé de fabrication d'un récipient d'emballage (11, 12, 13, 15), qui comprend les opérations suivantes:
placer une gaine (12, 121) à une surface intérieure dans une cavité de moule (35), ladite gaine contenant un matériau moussé;
déformer une feuille multicouche (21) moyennant une méthode à élargissement du bout pointu dans un récipient conteneur (11) sous forme de timbale, ledit récipient conteneur comprenant une couche extrême, pour le façonnage dudit récipient conteneur à l'intérieur de ladite gaine (12, 121) et à joindre une ou plusieurs sections de ladite couche extrême dudit récipient conteneur à une ou plusieurs sections de la face intérieure de ladite gaine,
dans lequel les zones de la face intérieure de ladite gaine (12, 121), qui se joignent aux zones de la couche extrême dudit récipient conteneur (11), sont faites en un matériau, qui est compatible avec les sections de ladite couche extrême dudit récipient conteneur.

2. Procédé selon la revendication 1, **caractérisé en ce que** ladite feuille (21) comprend une couche en un copolymère d'éthylène/alcool vinylique.

3. Procédé selon les revendications 1 ou 2, **caractérisé en ce que** ladite couche extrême extérieure dudit récipient conteneur (11) comprend du polypropylène et ladite gaine (12, 121) contient de polypropylène moussé en tant que matériau moussé.

4. Procédé selon la revendication 2, **caractérisé en ce qu'**au cours de l'étape de façonnage, ladite feuille (21) est chauffée à une température supérieure au point de fusion de ladite couche extrême dudit récipient conteneur (11) et inférieur au point de fusion de ladite couche en copolymère d'éthylène/alcool vinylique.

5. Procédé selon la revendication 3, **caractérisé en ce qu'**au cours de l'étape de façonnage, ladite feuille (21) est chauffée à une température supérieure au ont de fusion du propylène et inférieure au point de fusion de ladite couche en copolymère d'éthylène/alcool vinylique.

6. Procédé selon les revendications 1 ou 2, **caractérisé en ce que** ladite couche extrême dudit récipient conteneur (11) contient du polyéthylène et ladite gaine (12, 121) contient du polyéthylène moussé en tant que matériau moussé.

7. Procédé selon une quelconque des revendications précédentes, **caractérisé en ce qu'**il comprend l'étape supplémentaire, dans laquelle les extrémités supérieure et inférieure de ladite gaine (121) sont rabattues à l'intérieur de façon, que la face intérieure de ladite gaine présente des parties supérieure et inférieure, rabattues à l'intérieur, dans lequel les parties de ladite couche extrême dudit récipient conteneur (11) sont jointes aux parties supérieure et inférieure de la face intérieure de ladite gaine (121), qui sont rabattues à l'intérieur.
